# EUROPÄISCHE PATENTSCHRIFT

(11) **EP 1 491 428 B1**
(45) Veröffentlichungstag und Bekanntmachung des Hinweises auf die Patenterteilung: **04.10.2006**
(21) Anmeldenummer: 04013815.8
(22) Anmeldetag: 11.06.2004
(51) Int. Cl.: B62D 7/14

(54) **Nutzfahrzeug mit einer Vor- oder Nachlaufachse mit Adhäsionskraft bedingt eingelenkten Rädern**
Utility vehicle with a leading or trailing axle with wheels, self-steering through adhesive force
Véhicule utilitaire avec un essieu poussé ou trainé avec roues dirigées par les forces d'adhésion

(30) Priorität: 28.06.2003 DE 10329234
(43) Veröffentlichungstag der Anmeldung: 29.12.2004
(73) Patentinhaber: MAN Nutzfahrzeuge Aktiengesellschaft, 80976 München (DE)
(72) Erfinder: Karadeniz, Mustafa, 76571 Gaggenau (DE)

(56) Entgegenhaltungen:
- DE-A1- 19 803 745

## Beschreibung

Die Erfindung betrifft ein Nutzfahrzeug mit Merkmalen der im Oberbegriff des Anspruchs 1 angegebenen Art.

Die Erfindung geht aus von serienmäßig hergestellten MAN-Reisebussen, bei denen der angetriebenen Hinterachse eine Nachlaufachse mit adhäsionskraftbedingt eigenlenkbaren Rädern beigeordnet ist, deren Radträger über eine Spurstange miteinander verbunden sind. Diese Räder sind aus einer Einschlagposition mittels einer Stellvorrichtung in ihre Geradeausstellung rückführbar und in dieser arretierbar. Diese Stellvorrichtung weist je Rad einen eigenen Stellzylinder auf, der mittels einer Konsole am Achskörper der Nachlaufachse befestigt und dessen Kolben über eine schwenkbeweglich an ihm angelenkte Stellstange mit dem zugehörigen Radträger verbunden ist. Darüber hinaus ist auch noch ein Lenkungsdämpfer vorhanden, der die Eigenlenkbewegungen der Räder dämpft und sich zwischen einer achskörperseitigen und radträgerseitigen Anlenkstelle erstreckt. Beide Stellzylinder sind an einer entsprechenden Steuereinrichtung angeschlossen. Diese bekannte Stellvorrichtung erfüllt zwar die Anforderungen nach einwandfreier Funktion in den MAN-Reisebussen, nimmt aber sehr viel Bauraum ein und ist aufgrund ihrer speziellen Teile verhältnismäßig teuer.

Weiterhin offenbart DE 19803745 A die Merkmale des Oberbegriffs des Anspruchs 1.

Es ist daher Aufgabe der Erfindung, bei einem Nutzfahrzeug der gattungsgemäßen Art der Vor- oder Nachlaufachse eine Stellvorrichtung, mit der ihre Räder aus einer Einschlagposition in Geradeausstellung rückführbar sowie arretierbar sind, zuzuordnen, die weniger Bauraum beanspruchend und auch billiger als die vorerwähnte Serienlösung ist.

Diese Aufgabe ist erfindungsgemäß durch eine Stellvorrichtung mit den im Kennzeichen des Anspruchs 1 angegebenen Merkmalen gelöst.

Vorteilhafte Ausgestaltungen dieser Lösung sind in den Unteransprüchen gekennzeichnet.

Dadurch, dass die Stellvorrichtung zwischen den eigenlenkbaren Rädern angeordnet ist und die Rückstellung der Räder mittels "Dämpferstangen" erfolgt, können die Räder mit nur einem Rückstellzylinder in die Geradeausstellung gebracht werden. Die "Dämpferstangen" sind auf diese Einsatzzwecke abgestimmte Dämpfer, mit Kolben und Zylinder und beispielsweise mit Hydraulikflüssigkeit gefüllt, und sind so bemessen, dass sie, wenn sie die Rückstellfunktion übernehmen, als Rückstellstange wirken und die Rückstellkraft vom Stellzylinder übertragen können. Dabei steht der Kolben einer Dämpferstange am Boden des Zylinders an, so dass die Dämpferstange als starre Stange wirkt. Wenn der Kolben der Dämpferstange nicht am Zylinderboden anliegt, wirkt die Dämpferstange als Dämpfer bzw. Schwingungsdämpfer.

Der Stellzylinder ist ein Federspeicherzylinder, bei dem der Kolben bei Beaufschlagung mit Druckluft mit einem bestimmten Druck, z. B. 8 bar, annähernd frei beweglich ist. Wenn die Druckluft abgelassen ("der Zylinder entlüftet") wird, wird der Kolben durch die Feder im Federspeicherzylinder in eine Stellung gebracht, die nahe der Endlage des Stellzylinders ist. Diese genannte Stellung ist hier in dem Beispiel die blockierte Geradeausstellung der Räder.

### Beispiel:

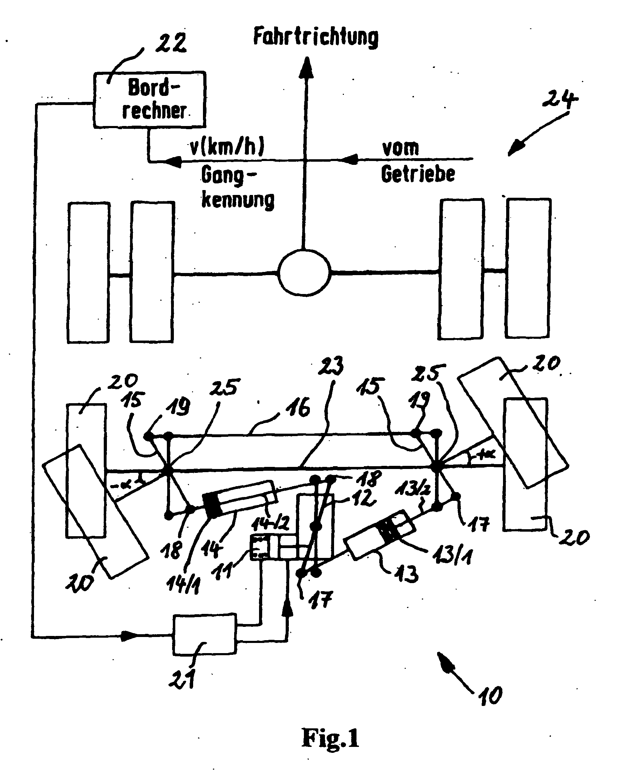

Bei Geradeausfahrt des Fahrzeugs ist das Koppelglied der Stellvorrichtung, in Fahrtrichtung gesehen, in Fahrtrichtung. Dabei sind die Kolben beider Dämpferstangen am Boden des jeweiligen Zylinders. Bei Geschwindigkeiten unter beispielsweise 35 km/h ist dabei der Stellzylinder der Stellvorrichtung druckluftbeaufschlagt und die Räder der Nach- oder Vorlaufachse stellen sich, adhäsionsbedingt, Adhäsion zwischen den Rädern der genannten Achse und der Fahrbahn, in die Geradeausstellung. Wird nun das Fahrzeug in eine Rechtskurve gelenkt, wird bei der Nachlaufachse:
- das linke Rad der Nachlaufachse durch Adhäsion um den Winkel -α (Fig. 1) geschwenkt
- dabei drückt die als Stange wirkende Dämpferstange (linksseitig von der Fahrzeugmitte) das Koppelglied in eine Schrägstellung
- das rechte Rad der Nachlaufachse wird durch Adhäsion und die Spurstange um den Winkel +α geschwenkt.
- durch das Schrägstellen des Koppelgliedes durch das linksseitige Rad und das Schrägstellen des rechtsseitigen Rades wandern die Gelenkstellen der rechtsseitigen Dämpferstange auseinander. Dadurch wird der Kolben der Dämpferstange in eine nicht am Zylinderboden liegende Arbeitsstellung gebracht, in der er als Dämpfer wirkt und z. B. mögliche Flatterschwingungen der Räder unterbindet.

Für die Fahrt in eine Linkskurve gilt das Gleiche wie beschrieben, aber spiegelbildlich.

Weiterhin gilt die beschriebene Funktion nur unterhalb einer bestimmten, festgelegten Grenzgeschwindigkeit z. B. 35 km/h oder 40 km/h.

Über dieser Grenzgeschwindigkeit stellt der Stellzylinder der Stellvorrichtung die Räder der Achse in die Geradeausstellung durch das Stellen der Koppelstange in die Anschlagposition, die z. B. in Fahrtrichtung gestellt wird. In dieser Position wird, je nach vorhergegangener Stellung der Räder, über diejenige Dämpferstange, die in Anschlagposition ist und als Stange wirkt, über ein Rad einer Seite und die Spurstange, beide Räder in Geradeausstellung gebracht.

Die Signale für den Stellzylinder kommen von einem Bordrechner, der die Grenzgeschwindigkeit und die aktuelle Geschwindigkeit kennt.

Beim Einlegen des Rückwärtsganges werden die Räder ebenfalls durch den Stellzylinder in die Geradeausstellung gebracht. Die Signale hierfür gibt ebenfalls der Bordrechner an den Stellzylinder bzw. an das Steuerventil für den Stellzylinder.

Eine Lenkwinkelerfassung für den Lenkwinkel an der Vorderachse ist nicht erforderlich, da das erfindungsgemäße System nur geschwindigkeitsabhängig und abhängig davon, ob ein Rückwärtsgang eingelegt ist oder nicht, gesteuert wird. Die erfindungsgemäße Lösung ist auch für Lastkraftwagen oder Anhänger oder Sattelauflieger mit adhäsionsbedingt lenkbaren Nach- oder Vorlaufachsen anwendbar.

In der Zeichnung ist ein Ausführungsbeispiel der Erfindung schematisch dargestellt.

Es zeigt:
- Fig. 1: ein Schema
- Fig. 2: die Stellvorrichtung bei Geradeausstellung der Räder
- Fig. 3: die Stellvorrichtung bei Linksstellung der Räder
- Fig. 4: den Stellzylinder mit Koppelglied und Anschluss der Dämpferstangen.

Die Fig. 1 zeigt das Schema der adhäsionsgelenkten Nachlaufachse 10. Die, in Fahrtrichtung gesehen, vor der Nachlaufachse 10 angeordnete nicht lenkbare Antriebsachse ist über ein Fahrgestell (nicht dargestellt) z. B. eines Omnibusses oder eines Lastkraftwagens indirekt verbunden.

Die Vorderachse(n) mit ihren lenkbaren Rädern (nicht gezeichnet) ist/sind vor der Antriebsachse angeordnet. Bei Geradeausfahrt, vorwärts, und unter einer bestimmten Grenzgeschwindigkeit, z. B. 35 km/h oder 40 km/h, stellen sich die lenkbaren Räder 20 der adhäsionsgelenkten Nachlaufachse 10 über die Adhäsionskräfte zwischen Reifen 20 und Fahrbahn selbst in die Geradeausposition. In dieser Stellung sind die Dämpferstangen 13, 14 in ihrer Anschlagposition in der jeweils der Kolben der entsprechenden Dämpferstange am Zylinderboden anliegt.

Wenn das Fahrzeug in eine Rechtskurve gelenkt wird und eine Geschwindigkeit unter der Grenzgeschwindigkeit hat, stellen sich die Räder 20 der Nachlaufachse 10 in eine geschwenkte Position, wie in Fig. 1 dargestellt. Dabei wirkt die Dämpferstange 14 als Stange, wobei der Kolben 14/1 am Zylinderboden anliegt, und die Dämpferstange 13 als Dämpfer 13, weil sie über die Räder 20 und die Spurstange 16 sowie das Koppelglied 12 in eine nicht am Anschlag (Anschlag = Kolben 13/1 ist am Zylinderboden) liegende Position gebracht wurde.

Das ganze System Räder 20 und mechanische Verbindungen 15, 16, 12, 13, 14 wird in dieser Stellung von der als Dämpfer 13 wirkende Dämpferstange 13 schwingungsgedämpft, so dass kein Radflattern auftreten kann.

Bei der Fahrt des Fahrzeugs in eine Linkskurve gilt das Gleiche, wie bei der Fahrt in die Rechtskurve, nur dass die Räder 20 in die entgegengesetzte Richtung geschwenkt werden, so dass dann die Dämpferstange 13 als Stange 13 und die Dämpferstange 14 als Dämpfer 14 wirkt.

Der Stellzylinder 11 ist bei Vorwärtsfahrt und unterhalb der Grenzgeschwindigkeit mit Druckluft beaufschlagt, das heißt, der Kolben im Stellzylinder ist annähernd frei hin und her bewegbar.

Über der festgelegten Grenzgeschwindigkeit, die z. B. 35 km/h oder 40 km/h sein kann, stellt der Stellzylinder 11 durch Signale aus dem Bordrechner 22 über die Koppelstange 12, die Dämpferstangen 13, 14 und die **Spurstange 16**, die Räder 20 der Nachlaufachse in die Geradeausstellung.

Bei Rückwärtsfahrt werden, wieder durch Signale aus dem Bordrechner 22, die Räder 20 immer durch den Stellzylinder 11 beim Erkennen des Einlegens des Rückwärtsganges in Geradeausstellung gebracht. Dabei bleibt der Stellzylinder 11 solange nicht mit Druckluft beaufschlagt was die blockierte Geradeausstellung der Räder 20 ergibt, bis die Rückwärtsfahrt beendet und der Rückwärtsgang herausgenommen ist.

Der Stellzylinder 11 wird durch ein Steuerventil 21, z. B. ein Magnetventil 21, gesteuert.

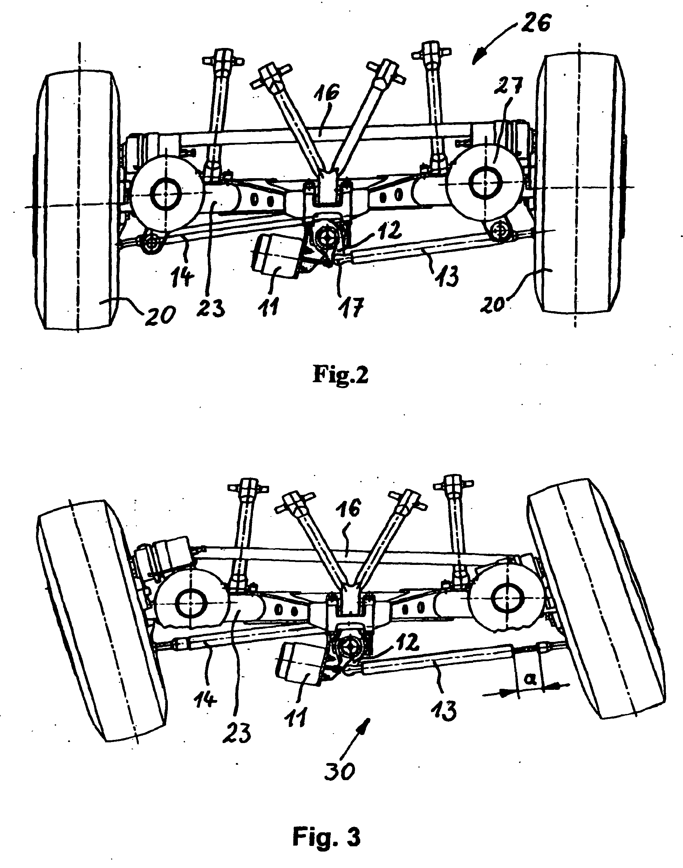

Die Fig. 2 zeigt eine mögliche Ausführung 26 der erfindungsgemäßen Vorrichtung. Die Räder 20 sind in der Geradeausstellung. Bei einer Geschwindigkeit unter der Grenzgeschwindigkeit ist der Stellzylinder 11 mit Druckluft beaufschlagt, und die Dämpferstangen 13, 14 wirken als Stangen. Bei der genannten Geschwindigkeit ist die Flatterneigung der Räder 20 gering, sollte jedoch eine Neigung zum Flattern auftreten, so wirken abwechselnd die Dämpferstangen 13, 14 als Dämpfer. Diejenige Dämpferstange 13, 14 die aus ihrer Anschlagslage, Anschlagslage ist, wenn der Kolben 13/1, 14/1 am Zylinderboden anliegt, gebracht wird, wirkt sofort als Dämpfer.

Wenn das Fahrzeug mit einer Geschwindigkeit über der Grenzgeschwindigkeit fährt, wird aus dem Stellzylinder 11 die Druckluft abgelassen, wodurch die Räder 20 in die Geradeausstellung gebracht werden und die Dämpferstangen 13, 14 als Stangen wirken. Ein elastischer Anschlag 41, der einstellbar ist, sorgt für eine flatterfreie Stellung der Räder 20. Alle Signale, ob das Fahrzeug unterhalb oder oberhalb der Grenzgeschwindigkeit fährt, kommen vom Bordrechner 22.

Damit beim Fahren im Grenzgeschwindigkeitsbereich ein Hin- und Herschalten des Stellzylinders 11 nicht erfolgt, ist eine Hysterese vorzusehen, mittels derer beispielsweise bei 40 km/h beim Hochfahren die Stellung der Räder 20 in der Geradeausposition blockiert wird und beim Verlangsamen der Geschwindigkeit von über der Grenzgeschwindigkeit her, die Blockierung der Stellung der Räder 20 in der Geradeausstellung bei 35 km/h wieder gelöst wird. Die beschriebene Hysterese ist mittels Daten im Bordrechner vorzusehen.

Die Fig. 3 zeigt beispielhaft einen Linkseinschlag 30 der Nachlaufachse 10. Bei diesem Linkseinschlag 30 fährt das Fahrzeug eine Rechtskurve und dies bei einer Geschwindigkeit unter der Grenzgeschwindigkeit, in der die Adhäsionslenkung wirkt. Die Reifen 20 stellen sich durch ihre Anlenkung an der Achse 23 schräg. Dabei wirkt die Dämpferstange 14 als Stange und zieht über das Koppelgelenk 12 und die Spurstange 16 die Dämpferstange 13 um das Maß "a" aus seiner Anschlagslage heraus. In dieser Stellung wirkt die Dämpferstange 13 als Dämpfer 13. Der Stellzylinder 11 ist dabei mit Druckluft beaufschlagt und kann sich annähernd frei hin und her bewegen.

Bei der Fahrt des Fahrzeugs in eine Linkskurve stellen sich die Räder 20 der Nachlaufachse 10 nacht rechts, bildlich nicht dargestellt. Dann wirkt die Dämpferstange 13 als Stange und die Dämpferstange 14 wird um ein äquivalentes Maß a ausgezogen und wirkt als Dämpfer.

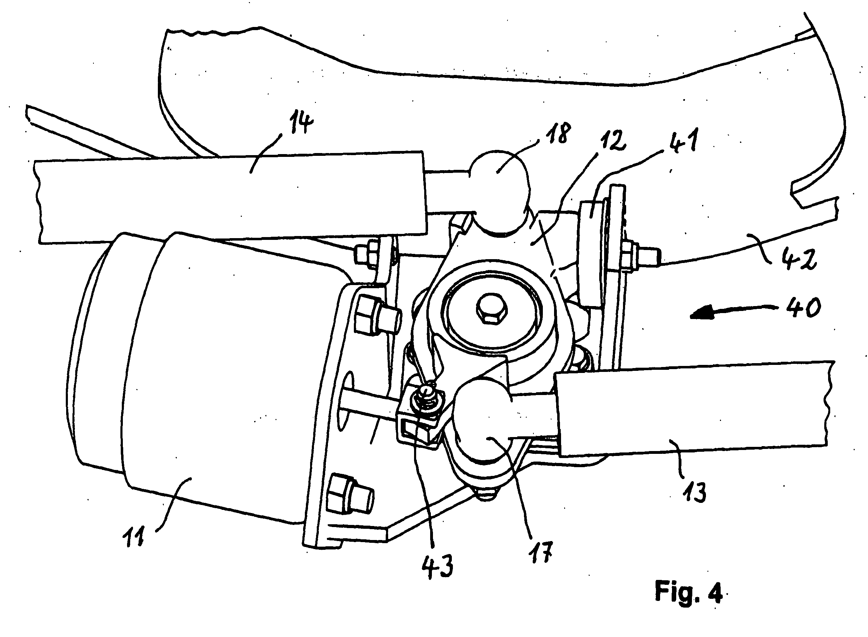

Die Fig. 4 zeigt die Koppelstelle 40 mit der Koppelstange 12. Die Dämpferstange 14 ist über das Gelenk 18 und die Dämpferstange 13 über das Gelenk 17 mit der Koppelstange 12 verbunden. Die Koppelstange 12 ist mit einem Teil 42 der Achse 23 schwenkbar verbunden. An der Koppelstange 12 ist über die Anlenkung 43 auch der Stellzylinder 11 angelenkt, dessen Kolben, wie beschrieben bei "mit Druckluftbeaufschlagung" annähernd frei beweglich ist und bei "ohne Druckluftbeaufschlagung" die Räder 20 über die Dämpferstangen 13, 14 und die Spurstange 16 zwangsweise die Geradeausstellung bringt.

### Bezugszeichenliste

- 10: Nachlaufachse
- 11: Stellzylinder, Federspeicherzylinder
- 12: Koppelstange
- 13: Dämpferstange
- 13/1: Kolben der Dämpferstange
- 13/2: Kolbenstange der Dämpferstange
- 14: Dämpferstange
- 14/1: Kolben der Dämpferstange
- 14/2: Kolbenstange der Dämpferstange
- 15: Anlenkpunkte am Radträger
- 16: Spurstange
- 17: Gelenkpunkt
- 18: Gelenkpunkt
- 19: Gelenkpunkt
- 20: Rad
- 21: Magnetventil
- 22: Bordrechner
- 23: Achse
- 24: Antriebsachse, nicht gelenkt
- 25: Achsschenkelbolzen
- 26: Nachlaufachse in Geradeausstellung
- 27: Luftfeder
- 30: Nachlaufachse in Schrägstellung
- 40: Koppelstelle
- 41: Elastischer Anschlag
- 42: Teil der Achse 23
- 43: Anlenkung des Stellzylinders

## Patentansprüche

1. Nutzfahrzeug wie Lastkraftwagen oder Omnibus, mit einem Bordrechner (22), mit wenigstens einer Vorderachse mit lenkbaren Rädern, mit wenigstens einer angetriebenen Hinterachse (24) und einer dieser beigeordneten Vor- oder Nachlaufachse (10) mit adhäsionskraftbedingt eigenlenkbaren Rädern (20), die über eine Spurstange (16) miteinander verbunden sind und einen Dämpfer (13, 14) gegen das Flattern der Räder (20) aufweisen und mit einer Stellvorrichtung, die pro Achse (10) Stellzylinder (11) aufweist, mittels derer und durch Signale vom Bordrechner (22) die Räder (20) der Achse (10) in eine Geradeausstellung bringbar sind und in dieser Stellung gehalten werden können, **dadurch gekennzeichnet, dass** je Achse (10) und unter Beibehaltung der Spurstange (16) nur ein Stellzylinder (11) in der zwischen den eigenlenkbaren Rädern (20) angeordneten Stellvorrichtung vorgesehen ist, der über eine Koppelstange (12) derart mechanisch an die mit den Rädern (20) verbundenen und als Dämpfer und/oder als Stange wirkenden Dämpferstangen (13, 14) gekoppelt ist, dass die Räder (20) sowohl adhäsionsbedingt eigenlenkbar, gedämpft lenkbar und gegen ein Flattern gedämpft sind als auch unter bestimmten, festgelegten Fahrbedingungen durch den einen Stellzylinder (11) und Signale aus dem Bordrechner (22) in eine blockierte Geradeausstellung bringbar sind.

2. Nutzfahrzeug nach Anspruch 1, **dadurch gekennzeichnet, dass** die Dämpferstangen (13, 14) in jeweils ihrer zusammengeschobenen Anschlagstellung als Stange (13, 14) wirken.

3. Nutzfahrzeug nach Anspruch 1 und 2, **dadurch gekennzeichnet, dass** jede der Dämpferstangen (13, 14) ein hydraulischer Dämpfer ist, der geeignet ist in seiner zusammengeschobenen Anschlagstellung, Druckkräfte, die der Stellzylinder (11) liefert, über seine Anlenkpunkte (17, 18) über den Zylinderboden, den Kolben (13/1, 14/1) und die Kolbenstange (13/2, 14/2) zu übertragen.

4. Nutzfahrzeug nach Anspruch 1, 2 und 3, **dadurch gekennzeichnet, dass** die Dämpferstangen (13, 14) in einer der zusammengeschobenen Anschlagstellung abweichender Position, als hydraulischer Dämpfer (13, 14) wirken.

5. Nutzfahrzeug nach Anspruch 4, **dadurch gekennzeichnet, dass** die Dämpferwirkung einer Dämpferstange (13 oder 14) so bemessen ist, dass sowohl das adhäsionsbedingte Eigenlenkverhalten ausreichend gedämpft und die Neigung zum Flattern der Räder (20) völlig gedämpft bzw. unterbunden wird.

6. Nutzfahrzeug nach Anspruch 1, **dadurch gekennzeichnet, dass** unterhalb einer bestimmten Grenzgeschwindigkeit des Fahrzeugs, wie beispielsweise 35 km/h oder 40 km/h die Räder (20) der eigenlenkbaren Vor- oder Nachlaufachse adhäsionsbedingt eigenlenkbar sind.

7. Nutzfahrzeug nach Anspruch 1 und 6, **dadurch gekennzeichnet, dass** über der bestimmten Grenzgeschwindigkeit des Fahrzeugs die Räder (20) in die Geradeausstellung durch den Stellzylinder (11) gestellt werden und gestellt bleiben.

8. Nutzfahrzeug nach Anspruch 1, **dadurch gekennzeichnet, dass** bei beabsichtigter oder beginnender Rückwärtsfahrt durch den Stellzylinder (11) die Räder (20) in eine Geradeausposition gestellt werden und so lange gestellt bleiben, bis die Rückwärtsfahrt beendet ist.

9. Nutzfahrzeug nach Anspruch 1, **dadurch gekennzeichnet, dass** der Stellzylinder (11) mittels Signalen aus dem Bordrechner (22) gesteuert wird.

## Claims

1. Commercial vehicle such as a truck or bus/coach, with an on-board computer (22), with at least one front axle with steerable wheels, with at least one driven rear axle (24) and a leading or trailing axle (10) associated to said rear axle (24) and provided with wheels (20) which are self-steerable owing to adhesion force, are connected with each other via a track rod (16), feature a damper (13, 14) to prevent the wheels (20) from fluttering, and with a setting device with adjusting cylinders (11) on each axle, by means of which adjusting cylinders (11) and with the aid of signals from the on-board computer (22) the wheels (20) on the axle (10) can be brought into and kept in straight-ahead position, **characterised in that** on each axle (10) and on retention of said track rod (16) only one adjusting cylinder (11) is provided in the setting device arranged between the self-steerable wheels (20) and is mechanically coupled with damper rods (13, 14) connected with the wheels (20) and acting as dampers and/or rods so that the wheels (20) can be self-steered owing to adhesion force, be steered in the damped mode, are damped to prevent fluttering and, under certain defined driving conditions, can be brought into a blocked straight-ahead position by the one adjusting cylinder (11) and the signals from the on-board computer (22).

2. Commercial vehicle according to the Claim 1, **characterised in that** each damper rod (13, 14) acts as a rod (13, 14) when in its telescoped stop position.

3. Commercial vehicle according to the Claims 1 and 2, **characterised in that** each damper rod (13, 14) is a hydraulic damper which in its telescoped stop position is capable of transferring pressure forces, supplied by the setting cylinder (11), via its location points (17, 18) above the cylinder bottom to the piston (13/1, 14/1) and the piston rod (13/2, 14/2).

4. Commercial vehicle according to the Claims 1, 2 and 3, **characterised in that** if in a position other than the telescoped stop position the damper rods (13, 14) act as hydraulic dampers (13, 14).

5. Commercial vehicle according to Claim 4, **characterised in that** the damping effect of one damper rod (13 or 14) is such that both the adhesion-related self-steering behaviour is sufficiently damped and the inclination of the wheels (20) to flutter is completely damped and suppressed.

6. Commercial vehicle according to Claim 1, **characterised in that** below a certain limit speed of the vehicle, eg 35 km/h or 40 km/h, the wheels (20) of the self-steerable leading or trailing axle can be self-steered owing to adhesion force.

7. Commercial vehicle according to the Claims 1 and 6, **characterised in that** above said limit speed of the vehicle the wheels (20) are returned to and kept in straight-ahead running position by the adjusting cylinder (11).

8. Commercial vehicle according to Claim 1, **characterised in that** in the event of intentional or unintentional vehicle reversing, the wheels (20) are brought into and kept in straight-ahead running position by the adjusting cylinder (11) until the reversing operation is terminated.

9. Commercial vehicle according to Claim 1, **characterised in that** the adjusting cylinder (11) is controlled by means of signals from the on-board computer (22).

## Revendications

1. Véhicule industriel tel qu'un camion ou un bus, équipé d'un ordinateur de bord (22), avec au minimum un essieu avant avec roues directrices, avec au minimum un pont arrière moteur (24) et un essieu poussé ou traîné (10) coordonné à celui-ci et équipé de roues (20) à direction autonome en fonction de la force d'adhérence, reliées l'une à l'autre par une barre de direction (16) et présentant un amortisseur (13, 14) pour réduire les vibrations des roues (20), et avec un dispositif d'ajustage présentant un vérin d'ajustage (11) par essieu et au moyen duquel et, grâce à des signaux provenant de l'ordinateur de bord (22), les roues (20) de l'essieu (10) peuvent être mises en position rectiligne et peuvent être maintenues dans cette position, **caractérisé en ce qu'**à chaque essieu (10) et conjointement à la barre de direction, un seul vérin d'ajustage est prévu dans le dispositif d'ajustage disposé entre les roues à direction autonome (20) et est couplé au niveau des barres d'amortissement (13, 14) reliées aux roues (20) et agissant mécaniquement comme amortisseur et/ou comme tringle par le biais d'une barre de couplage (12) de telle manière que les roues (20) soient directrices par adhérence, directrices de manière amortie et amorties contre les vibrations tout en pouvant être mises dans une position rectiligne bloquée dans certaines conditions de roulage définies grâce au vérin d'ajustage (11) et aux signaux provenant de l'ordinateur de bord (22).

2. Véhicule industriel selon la revendication 1, **caractérisé en ce que** les barres d'amortissement (13, 14) agissent comme tringles (13, 14) dans leurs positions d'arrêt respectives coulissées.

3. Véhicule industriel selon les revendications 1 et 2, **caractérisé en que** chacune des barres d'amortissement (13, 14) est un amortisseur hydraulique approprié pour transmettre des forces de pression fournies par le vérin d'ajustage (11) dans sa position d'arrêt coulissée par le biais de ses points d'articulation (17, 18), par l'intermédiaire de la tête du vérin, du vérin (13/1, 14/1) et de la tige de piston (13/2, 14/2).

4. Véhicule industriel selon les revendications 1, 2 et 3, **caractérisé en que** les barres d'amortissement (13, 14) agissent comme amortisseurs hydrauliques (13, 14) dans une position divergente de la position d'arrêt coulissée.

5. Véhicule industriel selon la revendication 4, **caractérisé en ce que** l'effet d'amortissement d'une barre d'amortissement (13 ou 14) est mesuré de telle manière que le comportement de la direction autonome en fonction de l'adhérence soit suffisamment amorti et que la tendance à la vibration des roues (20) soit totalement amortie ou supprimée.

6. Véhicule industriel selon la revendication 1, **caractérisé en ce que** les roues (20) de l'essieu poussé ou traîné à direction autonome peuvent être dirigées en fonction de l'adhérence en dessous d'une vitesse limite définie du véhicule, telle que, par exemple, 35 km/h ou 40 km/h.

7. Véhicule industriel selon les revendications 1 et 6, **caractérisé en ce que** les roues (20) sont mises en position rectiligne par le vérin d'ajustage (11) et sont maintenues dans cette position au-delà de la vitesse limite définie du véhicule.

8. Véhicule industriel selon la revendication 1, **caractérisé en ce qu'**en cas de marche arrière volontaire ou en cours, les roues (20) sont mises en position rectiligne grâce au vérin d'ajustage et sont maintenues dans cette position jusqu'à ce que la marche arrière soit terminée.

9. Véhicule industriel selon la revendication 1, **caractérisé en ce que** le vérin d'ajustage (11) est piloté au moyen de signaux émis par l'ordinateur de bord (22).
